# EUROPEAN PATENT SPECIFICATION

(11) **EP 0 447 730 B1**
(45) Date of publication and mention of the grant of the patent: **02.03.1994**
(21) Application number: 90403750.4
(22) Date of filing: 21.12.1990
(51) Int. Cl.: G01P 15/08

(54) **Vehicle brake warning device**
Bremswarnvorrichtung für Fahrzeuge
Appareil avertisseur de freinage pour des véhicules

(30) Priority: 19.03.1990 US 495608
(43) Date of publication of application: 25.09.1991
(73) Proprietor: Chen, Shih-Chiang, Ling-Ya Dist., Kaohsiung City (TW)
(72) Inventor: Chen, Shih-Chiang, Ling-Ya Dist., Kaohsiung City (TW)
(74) Representative: Mongrédien, André

(56) References cited:
- DE-A- 3 103 354
- US-A- 2 733 116
- US-A- 2 838 358
- US-A- 3 908 782

## Description

The invention relates to a vehicle brake warning device, more particularly to a vehicle brake warning device which sends out warning signals that vary according to the speed of the vehicle when the brakes are applied.

The brake lights of a vehicle are used to warn the succeeding vehicles that the vehicle is going to reduce its speed. A switch is actuated by a brake pedal of the vehicle whenever a pressing force is applied to the same. The switch electrically connects the brake lights of the vehicle to the car battery, thus operating the brake lights. However, mere signaling that the vehicle is about to reduce its speed does not provide information to the succeeding vehicles as to the current speed of the vehicle. It is believed that providing the drivers of the succeeding vehicles with information as to the current speed of the vehicle in front will enable them to make quicker decisions and faster responses.

Therefore, the objective of the present invention is to provide an inertial transducer and vehicle brake warning device which has a varying warning signal output that depends upon the speed of the vehicle when the brakes are applied.

Another objective of the present invention is to provide an inertial transducer whose sensitivity may be adjusted.

US-A-2,733,116 describes a device for recording vehicle decelerations according to the preamble of claim 1 and essentially comprising a ball running in a race according to the deceleration and successively reaching switches. When a switch is reached, a capacitor is discharged and a band of paper is burnt or perforated at a respective height which indicates the amount of the deceleration.

DE-A-31 03,354 discloses a device where a quicksilver ball runs according to a deceleration and modifies a resistor in an electrical circuit and the voltage at a terminal thereof.

The invention is generally defined by the characteristics of claim 1, and improved embodiments by claims 2 and 3.

Other features and advantages of the present invention will become apparent in the following detailed description of the preferred embodiment with reference to the accompanying drawings, in which :
Figure 1 is an explosed view of a preferred embodiment of an inertial transducer of the vehicle brake warning device according to this invention;
Figure 2 illustrates the layout of the vehicle brake warning device when mounted an a vehicle;
Figure 3 is a sectional view of this assembled preferred embodiment of an inertial transducer according to the present invention;
Figure 4 is a schematic circuit diagram of a control circuitry associated with this preferred embodiment of an inertial transducer according to the present invention;

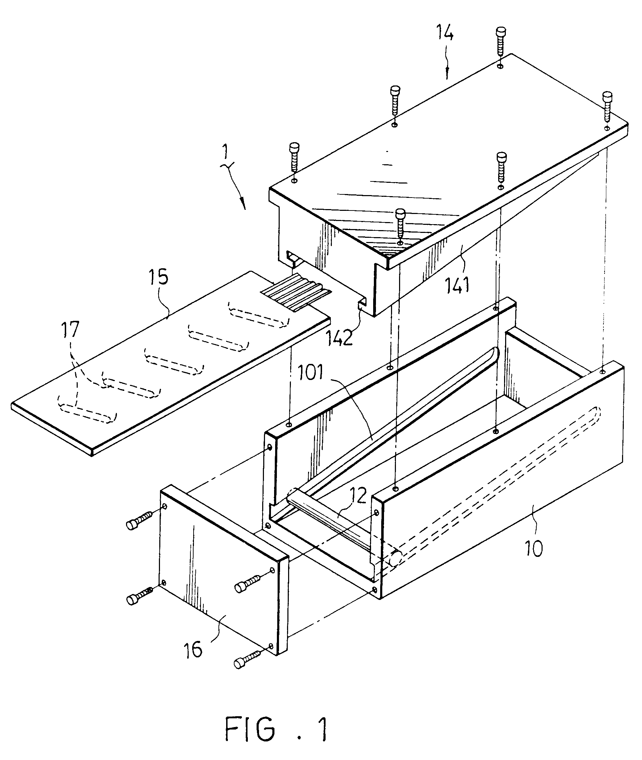

Referring to Figure 1, a preferred embodiment of an inertial transducer 1 of the vehicle brake warning device according to the present invention is shown to comprise a housing 10 formed as a hollow rectangular body, a switch actuator 12 (an example of which is a rollable magnet), a top cover 14, a support plate 15, a side cover 16, and a plurality of switches 17 (examples of which are magnetic switches). The housing 10 has a pair of inclined longitudinal rail grooves 101 provided on opposite sides thereof. The switch actuator 12 is a cylindrical member having two ends movably received by the rail grooves 101. The top cover 14 has a pair of oppositely disposed side faces 141 with inclined flanged edges serving as retaining grooves 142. The degree of inclination of the retaining grooves 142 is the same as that of the rail grooves 101. The support plate 15 is held by the retaining grooves 142. The switches 17 are aligned and positioned on the support plate 15 sequentially at predetermined intervals from the bottom side of the support plate 15 to the top side thereof. For explanatory purposes, the switches 17 positioned on the support plate 15 are identified as S1, S2, S3, S4 and S5.

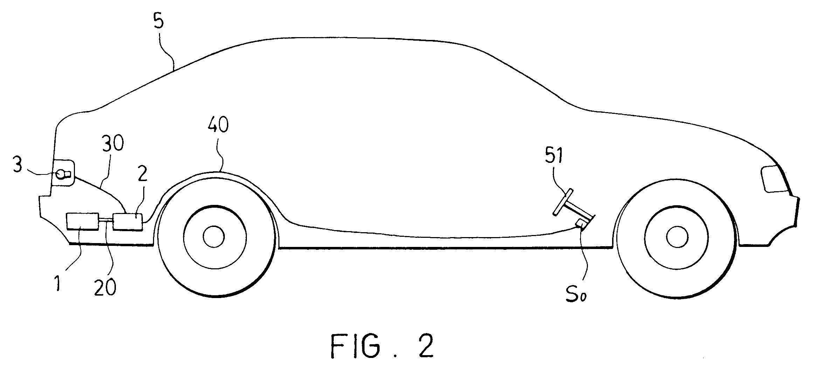

Figure 2 shows a layout of the vehicle brake warning device when mounted on a vehicle 5. The housing 10 of the inertial transducer 1 is fixedly mounted on the base of a trunk compartment of the vehicle 5, and is oriented such that the guide member 61 is parallel to the longitudinal axle of the vehicle 5. (The inertial transducer 1 can, of course, be mounted almost anywhere on the vehicle 8). The highest point of the rail grooves 101 should face the front end of the vehicle 5. A circuit casing 2 is disposed in front of the inertial transducer 1. The switches 17 are electrically connected to control circuitry 4 provided inside the circuit casing 2 via conducting wires 20. The brake lights 3 of the vehicle 5 are similarly connected to the control circuitry 4 via conducting wires 30. The brake lights 3 serve as a warning device for the preferred embodiment. A conducting wire 40 electrically connects the circuit casing 2 to a contact switch S0 provided below a brake pedal 51 of the vehicle 5. The contact switch S0 is closed when the brake pedal 51 is actuated.

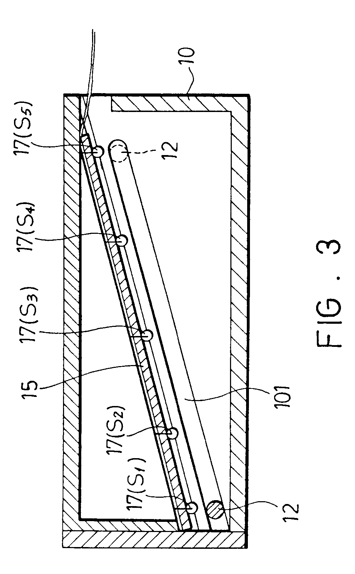

Referring to Figure 3, the bottom surface of the support plate 15 is adjacent to the rail grooves 101. The movement of the switch actuator 12 along the rail grooves 101 depends upon the braking speea or the speed of the vehicle 5 when the brakes are applied. If the braking speed is fast, the inertial force acting on the switch actuator 12 can move the switch actuator 12 to the highest point on the rail grooves 101, directly below the switch S5. Different magnitudes of inertial force acting on the switch actuator 12 vary the position of the same on the rail grooves 101.

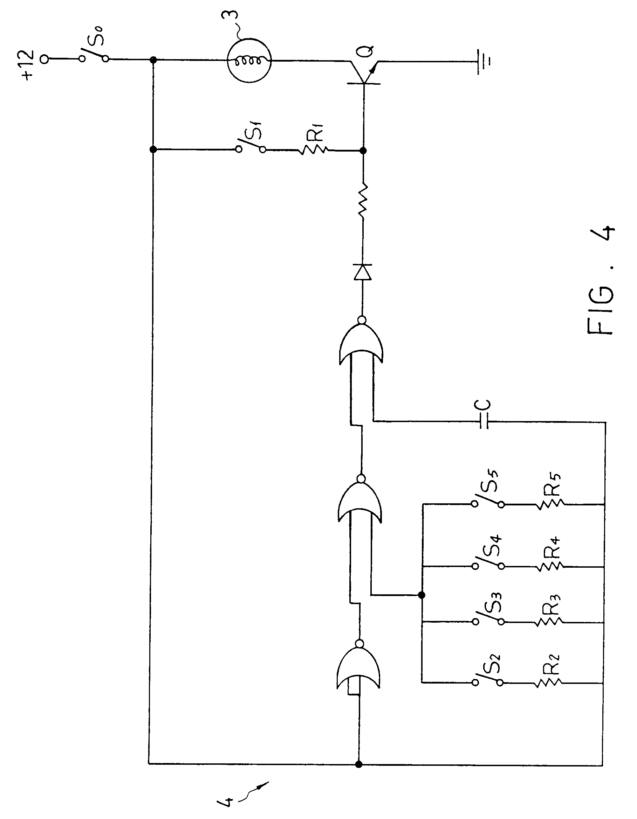

Figure 4 is a schematic circuit diagram of the control circuitry 4 associated with this preferred embodiment of an inertial transaucer 1 of the vehicle brake warning device according to the present invention. When the brake pedal 51 is actuated, the contact switch S0 moves to a closed position to electrically connect the control circuitry 4 to a power supply means (such as a +12 volt car battery). Current is thus supplied to turn ON the warning device 3. If the brake pedal 51 is actuated whenever the vehicle 5 is moving, any object, including the switch actuator 12, which is not fixed to the frame of the vehicle 5, moves because of the presence of an inertial force. If the braking speed of the vehicle 5 is fast, the inertial force is large, and the distance traveled by the switch actuator 12 on the rail grooves 101 is long. If the braking speed of the vehicle 5 is slow, the inertial force is less, and the distance traveled by the switch actuator 12 on the rail grooves 101 is shorter. The switch actuator 12 thus actuates a particular switch 17 for a range of inertial force. The switches S2, S3, S4, and S5 are respectively in series with resistors R2, R3, R4 and R5. The ohmic resistances of the resistors R2, R3, R4 and R5 are of different magnitudes and follow the mathematical relation R2 > R3 > R4 > R5. The resistors R2, R3, R4 and R5 are used in determining the charging time of a capacitor C. The charging time of the capacitor C is the product of the capacitance of the capacitor C and the resistance of the resistor in series with the switch 17 actuated by the switch actuator 12. The charge and discharge action of the capacitor C interrupts the supply of current to the warning device 3, thus allowing the warning device 3 to operate in a blinking manner. When the resistance is large, the charging time of the capacitor C is relatively long, the interval of blinking of the warning device 3 is also long, and the frequency of blinking is relatively low. When the resistance is small, the charging time of the capacitor C is relatively short, the interval of blinking of the warning device 3 is also short, and the frequency of blinking is relatively high. The frequency of blinking of the warning device 3 thus depends on which switch 17 was actuated by the switch actuator 17. The frequency of blinking follows the mathematical relation S5 > S4 > S3 > S2. It is also possible that no blinking of the warning device 3 occurs, such as when the braking speed of the vehicle 5 is relatively slow that only switch S1 is actuated. The warning device 3 can thus serve to warn and indicate to the succeeding vehicles the speed of the vehicle 5 incorporating the vehicle brake warning device of the present invention.

The warning device 3 of the vehicle brake warning device according to the present invention should not be limited to the brake lights as used in the above embodiments. The warning device 3 can be replaced by a plurality of sequentially arrangea light devices. A slight modification of the control circuitry will allow the light devices to provide a visual representation of the braking speed of the vehicle. The warning device 3 can be similarly replaced by a sound system. A slight modification of the control circuitry would enable the warning device 3 to transmit a corresponding audible sound for different braking speeds. The above mentioned modifications are widely known in the art and will not be further discussed.

The preferred embodiments of the inertial transducers may be modified by using a movable mercuric body as the switch actuator and mercury sensitive photoswitches for the switches. The movement of the mercuric body also depends upon the magnitude of the inertial force present.

## Claims

1. A vehicle brake warning device for use in a vehicle with a brake pedal, comprising:
a detector (1) for producing different electrical signals in response to the magnitude of the inertial force experienced during braking, said detector including a rolling switch actuator (12) and a plurality of switches (17) at different predetermined positions, the inertial force experienced during braking causing said switch actuator (12) to selectively move one of said switches (17) for actuation; a housing (10) and an inclined support plate (14) in said housing to hold said switches, said housing having an inclined guide rail (101) extending adjacent to and along the length of said support plate (14) to hold and guide said switch actuator, said switch actuator (12) being moved along said rail by a distance depending upon the magnitude of inertial force;
a control circuitry (4) electrically connected to said detector and receiving electrical signals from the same, said control circuitry having an output dependent upon said signals and including a capacitor (C), characterised in that said control circuitry (R) also includes a plurality of resistors (R) having different resistances, said resistors being respectively connected in series with said switches (17), said capacitor having a charging time which depends upon the magnitude of the resistance of the resistor in series with one of the switches actuated by said switch actuator (12), said output of said control circuitry depending upon said charging time of said capacitor;
a blinking warning device (3) is activated by said output of said control circuitry (4); and
whenever a pressing force is applied on said brake pedal (51) to reduce the speed of said vehicle (5), said detector experiences an inertial force whose magnitude depends upon the speed of said vehicle, said detector (1) sends out an appropriate signal dependent upon the magnitude of the inertial force to said control circuitry, said control circuitry activating said warning device to send out a warning signal which depends upon the magnitude of the inertial force.

2. A vehicle brake warning device as claimed in claim 1, characterised in that said warning device comprises a plurality of sequentially arranged light devices, said control circuitry (4) activating said light devices to provide a visual representation of the magnitude of said inertial force.

## Patentansprüche

1. Fahrzeug-Bremswarnvorrichtung zum Einsatz in einem Fahrzeug mit einem Bremspedal, die umfaßt:
einen Detektor (1) zur Erzeugung verschiedener elektrischer Signale in Reaktion auf den Betrag der während des Bremsens wirkenden Trägheitskraft, wobei der Detektor ein rollendes Schalterbetätigungselement (12) und eine Vielzahl von Schaltern (17) an verschiedenen vorgegebenen Stellen enthält, wobei das Schalterbetätigungselement (12) durch die während des Bremsens wirkende Trägheitskraft wahlweise einen der Schalter (17) bewegt und ihn betätigt; ein Gehäuse (10) und eine geneigte Aufnahmeplatte (14) in dem Gehäuse, die die Schalter trägt, wobei das Gehäuse eine geneigte Führungsschiene (101) aufweist, die sich über die Länge der Aufnahmeplatte (14) und an sie angrenzend erstreckt und das Schalterbetätigungselement hält und führt, wobei das Schalterbetätigungselement (12) um eine Strecke an der Schiene entlang bewegt wird, die von dem Betrag der Trägheitskraft abhängt;
eine Regelschaltung (4), die elektrisch mit dem Detektor verbunden ist und elektrische Signale von selbigem empfängt, wobei die Regelschaltung einen Ausgang hat, der von den Signalen abhängt, und sie einen Kondensator (C) enthält, **dadurch gekennzeichnet**, daß die Regelschaltung (R) des weiteren eine Vielzahl von Widerständen (R) mit unterschiedlichen Widerstandswerten enthält, wobei die Widerstände jeweils in Reihe mit den Schaltern (17) verbunden sind, wobei der Kondensator eine Ladezeit hat, die von dem Betrag des Widerstandswertes des Widerstandes abhängt, der sich in Reihe mit einem der Schalter befindet, der von dem Schalterbetätigungselement (12) betätigt wird, wobei der Ausgang der Regelschaltung von der Ladezeit des Kondensators abhängt;
daß eine blinkende Warneinrichtung (3) durch den Ausgang der Regelschaltung (4) betätigt wird; und
daß immer, wenn eine Druckkraft auf das Bremspedal (51) ausgeübt wird, um die Geschwindigkeit des Fahrzeuges (5) zu verringern, eine Trägheitskraft auf den Detektor wirkt, deren Betrag von der Geschwindigkeit des Fahrzeuges abhängt, wobei der Detektor (1) ein entsprechendes, von dem Betrag der Trägheitskraft abhängendes, Signal an die Regelschaltung leitet, wobei die Regelschaltung die Warneinrichtung auslöst, die ein Warnsignal ausgibt, das von dem Betrag der Trägheitskraft abhängt.

2. Fahrzeug-Bremswarnvorrichtung nach Anspruch 1, **dadurch** **gekennzeichnet,** daß die Warneinrichtung eine Vielzahl von nacheinander angeordneten Lichteinrichtungen umfaßt, wobei die Regelschaltung (4) die Lichteinrichtungen auslöst und so eine optische Darstellung des Betrages der Trägheitskraft erzeugt.

## Revendications

1. Dispositif avertisseur de freinage pour véhicules destiné à être utilisé dans un véhicule muni d'une pédale de frein, comprenant:
un détecteur (1) pour produire des signaux électriques différents en réponse à la valeur de la force d'inertie s'exerçant pendant le freinage, ledit détecteur comportant un dispositif d'actionnement de commutateur roulant (12) et une pluralité de commutateurs (17) à des positions prédéterminées différentes, la force d'inertie s'exerçant pendant le freinage faisant en sorte que ledit dispositif d'actionnement de commutateur (12) déplace sélectivement l'un desdits commutateurs (17) pour l'actionner; un boîtier (10) et une plaque de support inclinée (14) dans ledit boîtier pour porter lesdits commutateurs, ledit boîtier ayant un rail de guidage incliné (101) s'étendant au voisinage et suivant la longueur de ladite plaque de support (15) pour porter et guider ledit dispositif d'actionnement de commutateur, ledit dispositif d'actionnement de commutateur (12) étant déplacé le long dudit rail d'une distance dépendant de la valeur de la force d'inertie;
un circuit de commande (4) électriquement connecté audit détecteur et recevant des signaux électriques de ce dernier, ledit circuit de commande produisant une sortie dépendant desdits signaux et comportant un condensateur (C), caractérisé en ce que ledit circuit de commande (4) comporte également une pluralité de résistances (R) ayant des valeurs différentes, lesdites résistances étant respectivement connectées en série avec lesdits commutateurs (17), ledit condensateur ayant un temps de charge qui dépend de la valeur de la résistance en série avec l'un des commutateurs actionnés par ledit dispositif d'actionnement de commutateur (12), ladite sortie dudit circuit de commande dépendant dudit temps de charge dudit condensateur;
un dispositif avertisseur clignotant (3) est activé par ladite sortie dudit circuit de commande (4); et
chaque fois qu'une force de pression est appliquée sur ladite pédale de frein (51) pour réduire la vitesse dudit véhicule (5), ledit détecteur est soumis à une force d'inertie dont la valeur dépend de la vitesse dudit véhicule, ledit détecteur (1) envoit un signal approprié en fonction de la valeur de la force d'inertie audit circuit de commande, ledit circuit de commande active ledit dispositif pour envoyer un signal d'avertissement qui dépend de la valeur de la force d'inertie.

2. Dispositif avertisseur de freinage pour véhicules selon la revendication 1, caractérisé en ce que ledit dispositif avertisseur comprend une pluralité de dispositifs lumineux disposés séquentiellement, ledit circuit de commande (4) activant lesdits dispositifs lumineux pour produire une représentation visuelle de la valeur de ladite force d'inertie.
